# EUROPÄISCHE PATENTANMELDUNG

(11) **EP 1 184 237 A2**
(43) Veröffentlichungstag der Anmeldung: **06.03.2002**
(21) Anmeldenummer: 01118183.1
(22) Anmeldetag: 27.07.2001
(51) Int. Cl.: B60R 25/04

(54) **Sicherungsschutz zum Schutz des Aufhebens einer elektrischen Verbindung durch einen Nichtberechtigten**

(30) Priorität: 01.09.2000 DE 10043023
(71) Anmelder: AUDI AG, 85045 Ingolstadt (DE)
(72) Erfinder: Scholzen, Lothar, 85113 Böhmfeld (DE)
(74) Vertreter: Thielmann, Frank (DE)

(57) **Zusammenfassung**

Gemäß der Erfindung ist eine das Trennen der Verbindung hemmende Sicherungseinrichtung vorgesehen, die als mechanische Sicherungseinrichtung ausgebildet ein nicht lösbares Element (8,22) aufweist, das das Aufheben der elektrischen Verbindung (1) verhindert.

## Beschreibung

Aus der DE 195 27 504 C1 ist eine Vorrichtung zum Schutz eines Kraftfahrzeugsteuergerätes vor Austausch durch einen Nichtberechtigten bekannt. Es ist eine Sicherungseinrichtung vorgesehen, die das Aufheben einer elektrischen Verbindung zwischen einem Anschlusselement und einem Steuergerät hemmt. Die Sicherungseinrichtung weist hierzu einen elektromechanisch betätigbaren schwenkbaren Hebel auf, der das Anschlusselement und das Steuergerät in einer vorbestimmten Verbindungslage zueinander festlegt. Über einen Entriegelungscode kann der Hebel durch Ansteuerung derart verschwenkt werden, dass das Anschlusselement vom Steuergerät trennbar ist.

Eine solche Vorrichtung ist für eine Nachrüstung relativ ungeeignet, da das Anschlusselement und das Steuergerät in Verbindung mit dem schwenkbaren Hebel aufeinander abgestimmt sein müssen.

Aus der DE 195 19 058 A1 ist eine Abzugssicherung für eine elektrische Steckverbindung bekannt, die eine Manipulation an der Steckverbindung zur Umgehung einer Wegfahrsperre für ein Kraftfahrzeug erschwert oder verhindert. Die Abzugssicherung ist als Schloss ausgeführt, dass die zusammengefügte Steckverbindung zumindest mittelbar sichert. Das Schloss kann als ein die Steckverbindung zumindest teilweise umschließender Bügel oder als direkt in die Steckverbindung eingefügtes Sperrelement in Form eines Steck- oder Bügelschlosses ausgeführt sein. Eine solche Schloss-Sicherung ist als lösbare Sicherung relativ einfach und ohne größeren Zeitaufwand mittels eines Bolzenschneiders aufhebbar.

Aufgabe der Erfindung ist es daher eine Diebstahlsicherungseinrichtung eines Kraftfahrzeuges zum Schutz des Aufhebens einer elektrischen Verbindung durch einen Nichtberechtigten derart auszuführen, dass insbesondere eine leichte Nachrüstbarkeit möglich ist und der Aufwand zum Aufheben der elektrischen Verbindung hoch und zeitintensiv ist.

Die Aufgabe wird erfindungsgemäß durch den Gegenstand des Patentanspruches 1 gelöst.

Vorteile der Erfindung ist, dass die Sicherungsvorrichtung eine das Trennen der elektrischen Verbindung hemmende Sicherungseinrichtung aufweist, die als mechanische Sicherungseinrichtung ausgebildet ist und ein nicht lösbares Element aufweist, das das Aufheben der elektrischen Verbindung hindert. Dadurch, dass die Sicherungseinrichtung mechanisch ausgeführt ist und ohne elektromechanische Komponenten auskommt, ist ein leichtes Nachrüsten bei hoher Sicherheit gegen unberechtigten Zugriff möglich.

In Verbindung hiermit ist es vorteilhaft, wenn die Sicherungseinrichtung zumindest einen Teilbereich der elektrischen Verbindung umschließt und wenn das nicht lösbare Element den Umschluss gegen Aufheben sichert. Die elektrische Verbindung ist somit gegen Zugriffnahme von Außen mechanisch gesichert.

Ist die Sicherungseinrichtung als Blechhülle ausgebildet, die durch das nicht lösbare Element zumindest teilweise derart verschließbar ist, dass die elektrische Verbindung nicht mehr oder nur unter erhöhtem Aufwand trennbar ist, so ist der Zeitbedarf für das Trennen der elektrischen Verbindung so erheblich, dass ein Nichtberechtigter diesen Zugriff aufgeben wird, zumal er hierfür besondere Werkzeuge beispielsweise Trennwerkzeuge mit sich führen muss.

Ist der zumindest eine Teil der elektrischen Verbindung Teil eine elektronischen Einrichtung, beispielsweise ein Steuergerät, und ist der zumindest andere Teil der elektrischen Verbindung als elektrische Steckeinrichtung ausgebildet, so können die elektronische Einrichtung und die elektrische Steckverbindung im zusammengeführten Zustand in der Blechhülle derart angeordnet werden, dass sie von dieser zumindest teilweise derart umschlossen sind, dass deren Trennung in Verbindung mit dem nicht lösbaren Element nicht mehr oder nur unter erheblichem Aufwand möglich ist. Es ist somit vorteilhaft möglich auf kostengünstige und einfache Weise ein Steuergerät beispielsweise einer Brennkraftmaschine gegen unberechtigten Austausch zu sichern.

Eine besonders kostengünstige Sicherungsvorrichtung ergibt sich, wenn die Sicherungseinrichtung zweiteilig ausgeführt ist, und wenn die beiden Teile durch das zumindest eine nicht lösbare Element mechanisch verbindbar sind. Die beiden Teile können somit als Blech-Stanz-Teile kostengünstig hergestellt werden.

Alternativ können die Teile der elektrischen Verbindung auch über das nicht lösbare Element mechanisch gekoppelt werden, woraus sich ein noch geringerer Materialeinsatz ergibt.

Als nicht lösbares Element eignet sich vorteilhaft beispielsweise ein Niet, eine Abreißschraube, eine Klebeverbindung und/oder eine Schweißverbindung.

Weitere Vorteile und Einzelheiten der Erfindung ergeben sich aus der nachfolgenden Beschreibung eines Ausführungsbeispieles anhand der Zeichnungen.

Es zeigt:
- Fig. 1: eine Sicherungsvorrichtung nach der Erfindung für eine elektrische Steckverbindung,
- Fig. 2: eine Sicherungsvorrichtung nach der Erfindung für eine elektrische Steckeinrichtung und ein Steuergerät,
- Fig. 3: eine Sicherungsvorrichtung nach der Erfindung mit einem einer Steckeinrichtung und einem Steuergerät zugeordneten nicht lösbaren Element,
- Fig. 4: eine Sicherungsvorrichtung nach der Erfindung welche als Blechhülle ausgebildet ein Steuergerät und eine Steckverbindung teilweise und gemäß der
- Fig. 5: vollständig umgibt und
- Fig. 6: eine bevorzugte Sicherungsvorrichtung nach der Erfindung mit einer Blechhülle in die das Steuergerät in Verbindung mit der elektrischen Steckverbindung einbringbar und durch das nicht lösbare Element verschließbar ist.

In der nachfolgenden Beschreibung der Erfindung anhand der Zeichnungen werden jeweils gleiche Elemente mit den gleichen Bezugszeichen gekennzeichnet.

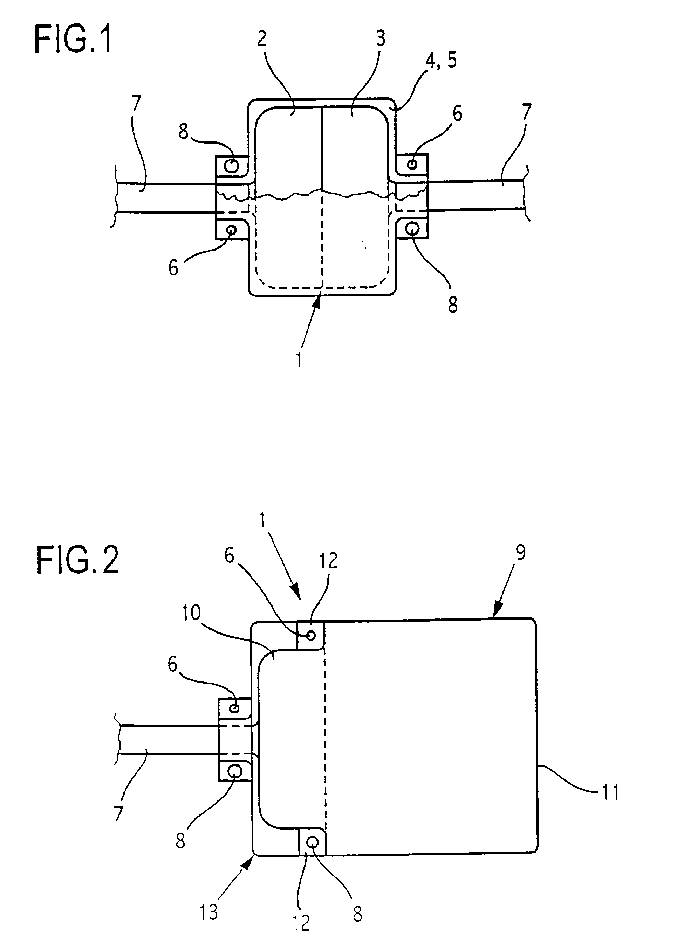

Aus der Fig. 1 geht ein Ausführungsbeispiel einer ersten Sicherungsvorrichtung nach der Erfindung hervor, die dazu dient eine elektrische Steckverbindung 1 aus beispielsweise einem Stecker 2 und einer Steckerbuchse 3 gegen das Aufheben der elektrischen Verbindung durch einen Nichtberechtigen zu schützen. Die Sicherungseinrichtung besteht hierbei vorzugsweise aus zwei deckungsgleichen Formteilen 4,5, bzw. einem Form- und einem Deckelteil die, übereinandergelegt, geeignet sind, die elektrische Steckverbindung 1 aufzunehmen und möglichst eng zu umschließen. Die deckungsgleichen Formteile 4,5 weisen einander zugeordnete Durchbrechungen 6 auf, die im Ausführungsbeispiel in dem Kabel 7 zugeordneten Bereichen der Formteile 4,5 ausgebildet sind. Diesen Durchbrechungen 6 können nicht lösbare Elemente 8 zugeordnet sein, über die die Formteile 4,5 in einem festen Verbund gehalten werden. Die nicht lösbaren Elemente 8 können hierzu beispielsweise als Niete, Abreißschrauben, Klebeverbindung und/oder als Schweißverbindung ausgeführt sein. Vorzugsweise sind die nicht lösbaren Elemente 8 derart ausgebildet, dass sie keinen Angriff für ein Werkzeug bieten. Sie können hierzu beispielsweise im wesentlichen deckungsgleich zur Oberfläche der Formteile 4,5 ausgebildet sein oder einen linsenförmigen Kopf aufweisen, so dass der Angriff mit einem Bohrer erschwert ist. Besonders bevorzugt wird die Sicherungsvorrichtung mit der elektrischen Steckverbindung 1 und den Formteilen 4,5 derart beispielsweise im Motorraum oder in der Fahrgastzelle eines Kraftfahrzeuges angeordnet, dass sie nicht mit einem Karosserieteil in Verbindung gelangen kann. Einem Nichtberechtigten wird somit kein Widerstand für den unberechtigten Zugriff geboten. Die Formteile 4,5 können auf besonders einfache und kostengünstige Weise aus Blech, insbesondere einem hoch widerstandfähigen Blech geformt sein.

Aus der Fig. 2 geht ein Ausführungsbeispiel einer zweiten Sicherungsvorrichtung nach der Erfindung hervor, wobei die elektrische Steckverbindung 1 von einer elektronischen Einrichtung 9, beispielsweise einem Steuergerät für ein Kraftfahrzeug, insbesondere einer Brennkraftmaschine, und einer zugeordneten elektrischen Steckeinrichtung 10 beispielsweise einem Steuergerätstecker bzw. einer Steuergerätbuchse zum Kontaktieren eines Kabels 7 mit der elektronischen Einrichtung 9 gebildet ist. Im Ausführungsbeispiel weist die elektronische Einrichtung 9 am Gehäuse 11 ausgebildete Laschen 12 auf, an denen ein der elektrischen Steckeinrichtung 10 zugeordnetes Formteil 13 mittels zumindest eines nicht lösbaren Elementes 8 in fester Verbindung gehalten werden kann.

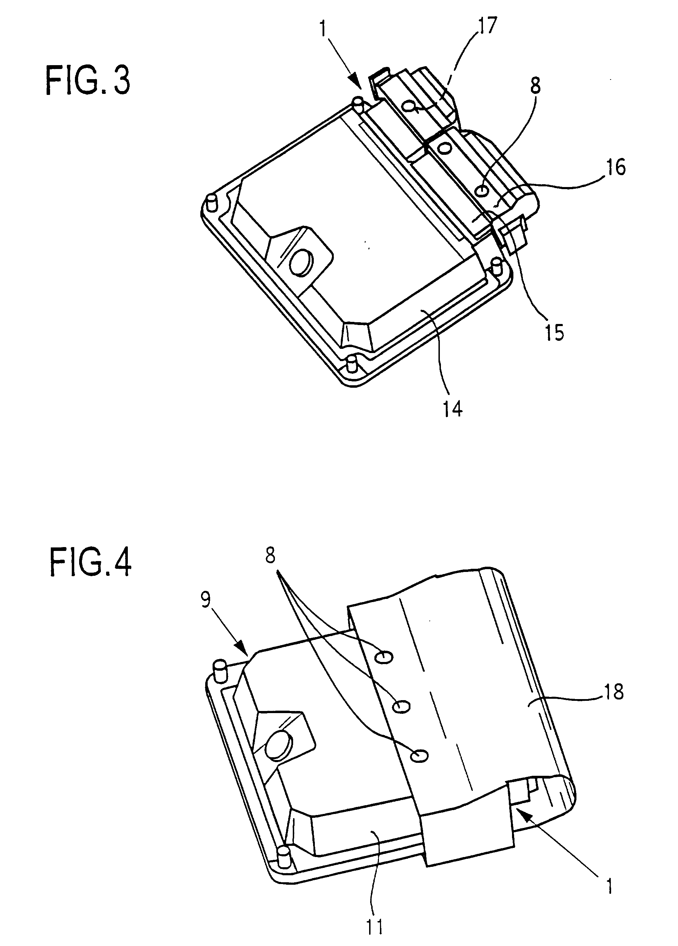

Ein weiteres Ausführungsbeispiel einer dritten Sicherungsvorrichtung nach der Erfindung ergibt sich aus der Figur 3. Diese Sicherungsvorrichtung ist mit besonders geringem Materialeinsatz realisierbar. Hiernach weisen beispielsweise ein am Steuergerät 14 vorgesehenes erstes Teil 15 und ein zweites Teil 16 einer elektrischen Steckverbindung 1 einander zugeordnete Öffnungen 17 auf, in die im zugeordneten Zustand zumindest ein nicht lösbares Element 8 eingreift. Das erste und/oder zweite Teil 15,16 können so ausgebildet sein, dass sie beim gewaltsamen Trennen zerstört werden und somit ein weiterer Zugriff erheblich erschwert wird.

Beim Ausführungsbeispiel einer vierten Sicherungsvorrichtung nach der Erfindung gemäß der Fig. 4 umschließt beispielsweise ein einteiliges Formteil 18 zumindest einen Teilbereich der elektrischen Steckverbindung 1 und ist mit vorzugsweise mehreren nicht lösbaren Elementen 8 am Gehäuse 11 der elektronischen Einrichtung 9 befestigt. Das einteilige Formteil 18 ist auch hierbei vorzugsweise so ausgebildet, dass es möglichst keine Angriffsfläche für ein Werkzeug bietet.

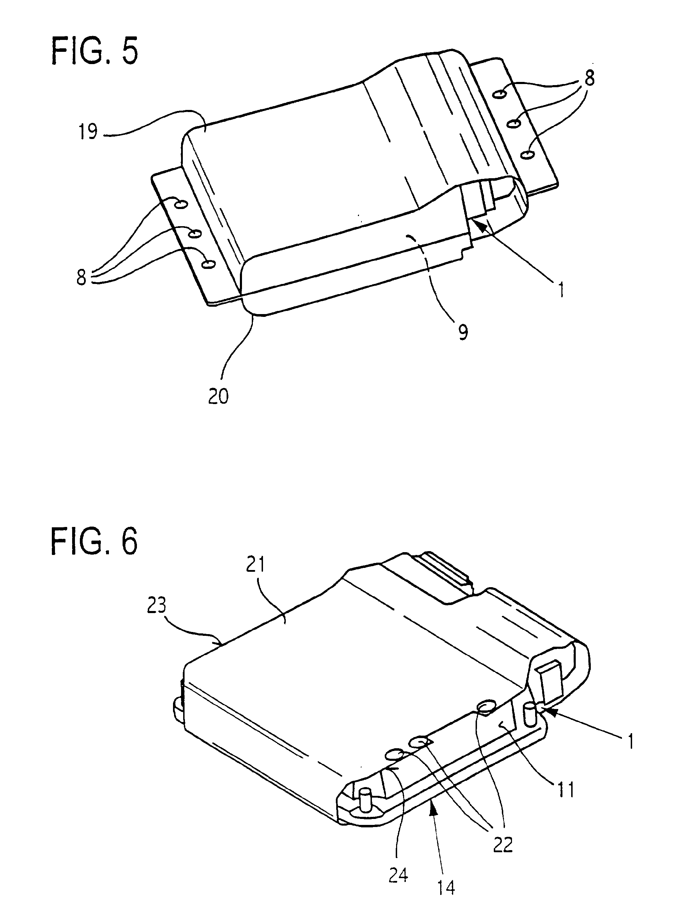

Gemäß eines weiteren in der Fig. 5 dargestellten Ausführungsbeispieles einer fünften Sicherungsvorrichtung nach der Erfindung, sind Gehäuseformteile 19,20 so ausgebildet, dass sie die gesamte elektronische Einrichtung 9 zumindest derart umschließen, dass weder die elektronische Einrichtung 9 noch die elektrische Steckverbindung 1 aus dem Gehäuseformteilverbund 19,20 entfernt werden kann. Die Gehäuseformteile 19,20 sind auch hier über nicht lösbare Elemente 8 miteinander verbunden.

Eine bevorzugte Sicherungsvorrichtung nach der Erfindung wird anhand der Fig. 6 erläutert. Die Sicherungsvorrichtung wird hierbei beispielsweise von einer einteiligen Blechhülle 21 in Verbindung mit einem als zumindest einer Abreißschraube 22 ausgebildeten nicht lösbaren Element 8 gebildet. Die Blechhülle 21 kann aus einem Blechstreifen geformt werden, der das Steuergerät 14 und die Steckverbindung 1 eng umschließt und dessen Enden beispielsweise miteinander verschweißt, verlötet, vernietet oder verklebt sind. Die Enden des Blechstreifens können einander aber auch überlappen und über nicht lösbare Elemente 8 miteinander und/oder mit dem Gehäuse 11 des Steuergerätes 14 verbunden werden. Das Steuergerät 14 ist mit der elektrischen Steckverbindung 1 in die Blechhülle 21 einbringbar, deren eine Seite 23 beispielsweise durch eine Blechabkantung verschlossen ist. Die andere, offene Seite 24 ist zumindest teilweise über zumindest eine Abreißschraube 22, vorzugsweise sind mehrerer Abreißschrauben 22 vorgesehen, derart verschließbar, dass das Steuergerät 14 und die elektrische Steckverbindung 1 nicht mehr oder nur noch äußerst schwer aus der Blechhülle 21 entfernt werden kann.

### BEZUGSZEICHENLISTE

- 1: Elektrische Steckverbindung
- 2: Stecker
- 3: Buchse
- 4,5: Formteil
- 6: Durchbrechung
- 7: Kabel
- 8: Nicht lösbares Element
- 9: Elektronische Einrichtung
- 10: Elektrischen Steckeinrichtung
- 11: Gehäuse
- 12: Laschen
- 13: Steuergerätestecker / Steuergerätebuchse - Formteil
- 14: Steuergerät
- 15: Erstes Teil
- 16: Zweites Teil
- 17: Öffnung
- 18: Einteiliges Formteil
- 19,20: Gehäuseformteile
- 21: Blechhülle
- 22: Abreißschraube
- 23: Eine Seite
- 24: Offene Seite

## Patentansprüche

1. Kraftfahrzeug mit einer Diebstahlsicherungseinrichtung,
mit zumindest einem Steuergerät (9) zur Steuerung einer Antriebseinrichtung des Kraftfahrzeuges,
mit zumindest einer elektrischen Steckverbindung (1) eines mit dem Steuergerät (9) verbindbaren Kabels (7),
mit einer Einrichtung (4,5,8;11,12,8;15,16,8;18,8;,19,20,8;21,22) zum Verhindern des unberechtigten Zugriffs auf das Kraftfahrzeug,
wobei die Einrichtung (4,5,8;11,12,8;15,16,8;18,8;,19,20,8;21,22) als mechanische Diebstahlsicherungseinrichtung ausgeführt ist,
wobei die mechanische Diebstahlsicherungseinrichtung zumindest ein nicht lösbares Element (8,22) aufweist,
wobei das nicht lösbare Element (8,22) zumindest einem für den Betrieb des Kraftfahrzeugs notwendigen Steuergerät (9) und/oder einer Kabelverbindung (1) derart zugeordnet ist, dass die elektrische Verbindung nicht oder nur mit hohem mechanischen und zeitlichen Aufwand aufgehoben werden kann.

2. Kraftfahrzeug mit einer Diebstahlsicherungseinrichtung nach Anspruch 1,
wobei die Diebstahlsicherungseinrichtung (4,5,8;11,12,8;15,16,8; 18,8;,19,20,8;21,22) zumindest einen Teilbereich der elektrischen Verbindung umschließt und
wobei das nicht lösbare Element (8,22) den Umschluss gegen Aufheben sichert.

3. Kraftfahrzeug mit einer Diebstahlsicherungseinrichtung nach Anspruch 1 oder 2,
wobei die Diebstahlsicherungseinrichtung (4,5,8;11,12,8;15,16,8;18,8; 19,20,8;21,22) als Blechhülle (21) ausgebildet ist, die durch das nicht lösbare Element (22) zumindest teilweise derart verschließbar ist, dass die elektrische Verbindung (1) nicht mehr oder nur unter hohem Aufwand trennbar ist.

4. Kraftfahrzeug mit einer Diebstahlsicherungseinrichtung nach Anspruch 3,
wobei die elektrische Verbindung (1) zumindest teilweise in der Blechhülle (21) angeordnet ist.

5. Kraftfahrzeug mit einer Diebstahlsicherungseinrichtung nach einem der Ansprüche 3 bis 4,
wobei der zumindest eine Teil (15) der elektrischen Verbindung Teil der elektronischen Einrichtung (9) ist,
wobei der zumindest andere Teil (16) der elektrischen Verbindung (1) als elektrische Steckeinrichtung (10) ausgebildet ist und
wobei die elektronische Einrichtung (9) und die elektrische Steckeinrichtung (10) im zusammengeführten Zustand in der Blechhülle (21) derart angeordnet und umschlossen sind, dass deren nicht mehr oder nur unter erheblichem Aufwand möglich ist.

6. Kraftfahrzeug mit einer Diebstahlsicherungseinrichtung nach einem der Ansprüche 1 bis 5,
wobei die Diebstahlsicherungseinrichtung (4,5,8;11,12,8;15,16,8; 18,8;19,20,8;21,22) zweiteilig ausgeführt ist und
wobei die beiden Teile durch das zumindest eine nicht lösbare Element (8,22) mechanisch verbindbar sind.

7. Kraftfahrzeug mit einer Diebstahlsicherungseinrichtung nach einem der Ansprüche 5 oder 6,
wobei die Teile der elektrischen Verbindung (1) über das nicht lösbare Element (8) mechanisch gekoppelt sind.

8. Kraftfahrzeug mit einer Diebstahlsicherungseinrichtung nach einem der Ansprüche 1 bis 7,
wobei das nicht lösbare Element (8) als Niet, als Abreißschraube (22) als Klebeverbindung und/oder als Schweißverbindung ausgeführt ist.

9. Blechhülle der Sicherungsvorrichtung nach einem der Ansprüche 3 bis 8.
